# EUROPEAN PATENT SPECIFICATION

(11) **EP 4 189 864 B1**
(45) Date of publication and mention of the grant of the patent: **18.12.2024**
(21) Application number: 21735308.5
(22) Date of filing: 25.06.2021
(51) Int. Cl.: H04L 67/51, H04L 67/562, H04L 67/02, H04L 69/22

(54) **NETWORK FUNCTIONALITY (NF) AWARE SERVICE PROVISION BASED ON SERVICE COMMUNICATION PROXY (SCP)**
NETZFUNKTIONALITÄTSBEWUSSTE DIENSTBEREITSTELLUNG AUF DER GRUNDLAGE EINES SERVICE COMMUNICATION PROXY (SCP)
FOURNITURE DE SERVICES TENANT COMPTE DE LA FONCTIONNALITÉ DU RÉSEAU (NF) BASÉE SUR LE PROXY DE COMMUNICATION DE SERVICES (SCP)

(30) Priority: 31.07.2020 EP 20382709
(43) Date of publication of application: 07.06.2023
(73) Proprietor: Telefonaktiebolaget LM Ericsson (publ), 164 83 Stockholm (SE)
(72) Inventor: RODRIGO, Maria Cruz Bartolome, 28189 Torremocha de Jarama, Madrid (ES); HALLENSTAL, Magnus, 187 50 TÄBY (SE)
(74) Representative: Ericsson
(86) International application number: PCT/EP2021/067507
(87) International publication number: WO 2022/022907

(56) References cited:
- EP-A1- 3 866 397
- EP-A1- 3 866 559
- CN-A- 110 830 543
- US-A1- 2021 168 215
- "3rd Generation Partnership Project; Technical Specification Group Services and System Aspects; System architecture for the 5G System (5GS); Stage 2 (Release 16)", 27 March 2020 (2020-03-27), XP051867850, Retrieved from the Internet <URL:https://ftp.3gpp.org/tsg_sa/WG2_Arch/Latest_SA2_Specs/DRAFT_INTERIM/23501-g40_CRs_Implemented_CR2195Fix_CR2085_mod_R4.zip 23501-g40_CRs_Implemented_CR2195Fix_CR2085_mod_R4.docx> [retrieved on 20200327]

## Description

### Technical Field

The disclosure relates to methods for providing information to, and operating, a network node. The disclosure also relates to network nodes configured to operate in accordance with those methods.

### Background

There exist various techniques for handling a request for a service in a network. A service request is generally from a consumer of the service ("service consumer") to a producer of the service ("service producer"). For example, a service request may be from a network function (NF) node of a service consumer to an NF node of a service producer. The NF node of the service consumer and the NF node of the service producer can communicate directly or indirectly. This is referred to as direct communication and indirect communication respectively. In the case of indirect communication, the NF node of the service consumer and the NF node of the service producer may communicate via a service communication proxy (SCP) node.

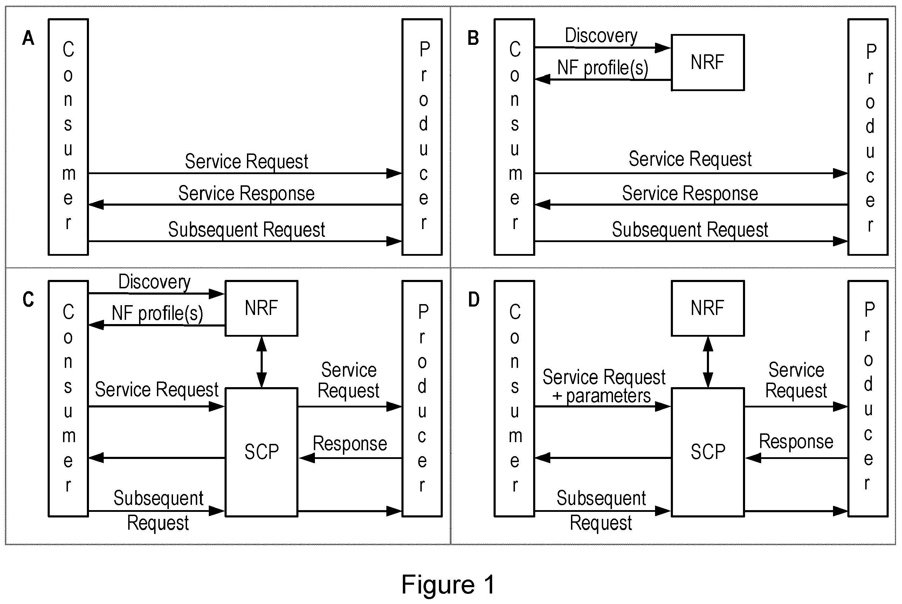

Figure 1A-D illustrates different existing systems for handling service requests, as set out in 3GPP TS 23.501 v16.4.0. In more detail, Figure 1A and 1B illustrates a system that uses direct communication, while Figure 1C and 1D illustrates a system that uses indirect communication.

In the systems illustrated in Figure 1A and 1B, a service request is sent directly from the NF node of the service consumer to the NF node of the service producer. A response to the service request is sent directly from the NF node of the service producer to the NF node of the service consumer. Similarly, any subsequent service requests are sent directly from the NF node of the service consumer to the NF node of the service producer. The system illustrated in Figure 1B also comprises a network repository function (NRF). Thus, in the system illustrated in Figure 1B, the NF node of the consumer can query the NRF to discover suitable NF nodes of the service producer to which to send the service request. In response to such a query, the NF node of the consumer can receive an NF profile for one or more NF nodes of the service producer and, based on the received NF profile(s) can select an NF node of the service producer to which to send the service request. In the system illustrated in Figure 1A, the NRF is not used and instead the NF node of the consumer may be configured with the NF profile(s) of the NF node(s) of the service producer.

In the systems illustrated in Figure 1C and 1D, a service request is sent indirectly from the NF node of the service consumer to the NF node of the service producer via a service communication proxy (SCP) node. A response to the service request is sent indirectly from the NF node of the service producer to the NF node of the service consumer via the SCP. Similarly, any subsequent service requests are sent indirectly from the NF node of the service consumer to the NF node of the service producer via the SCP. The systems illustrated in Figure 1C and D also comprise an NRF.

In the system illustrated in Figure 1C, the NF node of the consumer can query the NRF to discover suitable NF nodes of the service producer to which to send the service request. In response to such a query, the NF node of the consumer can receive an NF profile for one or more NF nodes of the service producer and, based on the received NF profile(s) can select an NF node of the service producer to which to send the service request. In this case, the service request sent from the NF node of the service consumer to the SCP comprises the address of the selected NF node of the service producer. The NF node of the service consumer can forward the service request without performing any further discovery or selection. In case the selected NF node of the service producer is not accessible for any reason, it may be up to the NF node of the service consumer to find an alternative. In other cases, the SCP may communicate with the NRF to acquire selection parameters (e.g. location, capacity, etc.) and the SCP may select an NF node of the service producer to which to send the service request.

In the system illustrated in Figure 1D, the NF node of the consumer does not carry out the discovery or selection process. Instead, the NF node of the consumer adds any necessary discovery and selection parameters (required to find a suitable NF node of the service producer) to the service request that it sends via the SCP. The SCP uses the request address and the discovery and selection parameters in the service request to route the service request to a suitable NF node of the service producer. The SCP can perform discovery with the NRF.

For the fifth generation core (5GC), from Release 16, the SCP is included as a network element to allow indirect communication between an NF node of a service consumer and an NF node of a service producer. The indirect communication that is used can be either of the two indirect communications options described earlier with reference to Figure 1C and 1D.

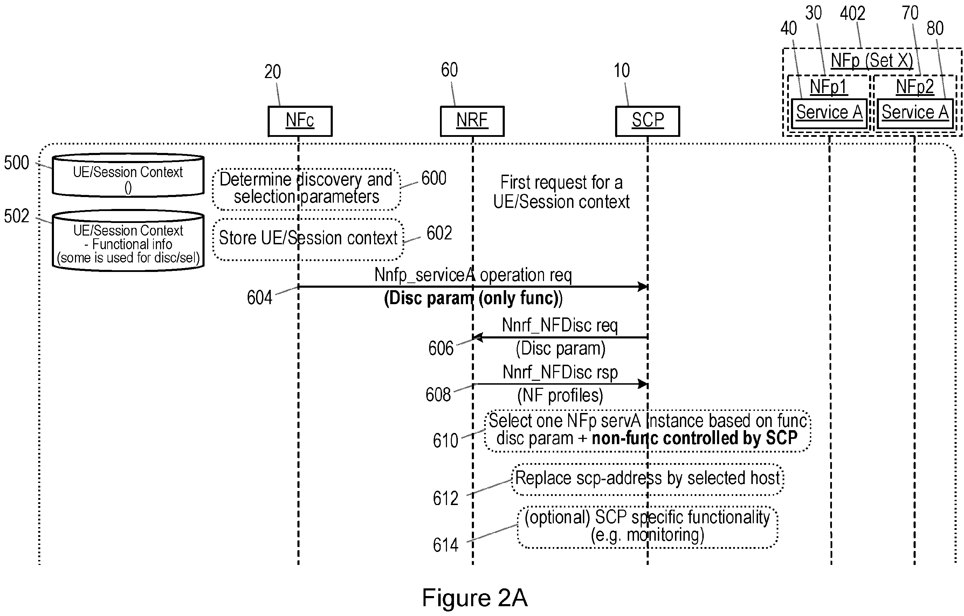

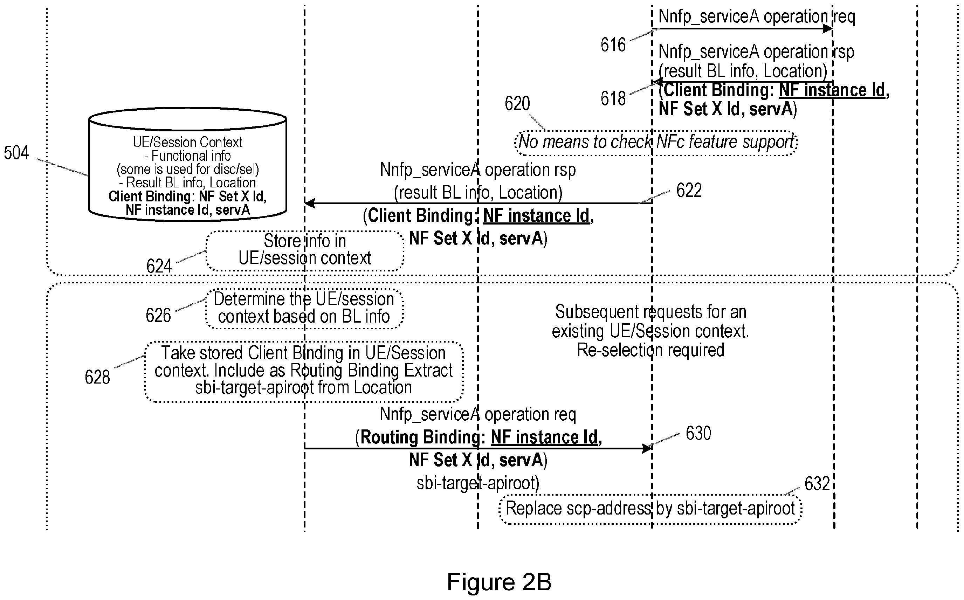

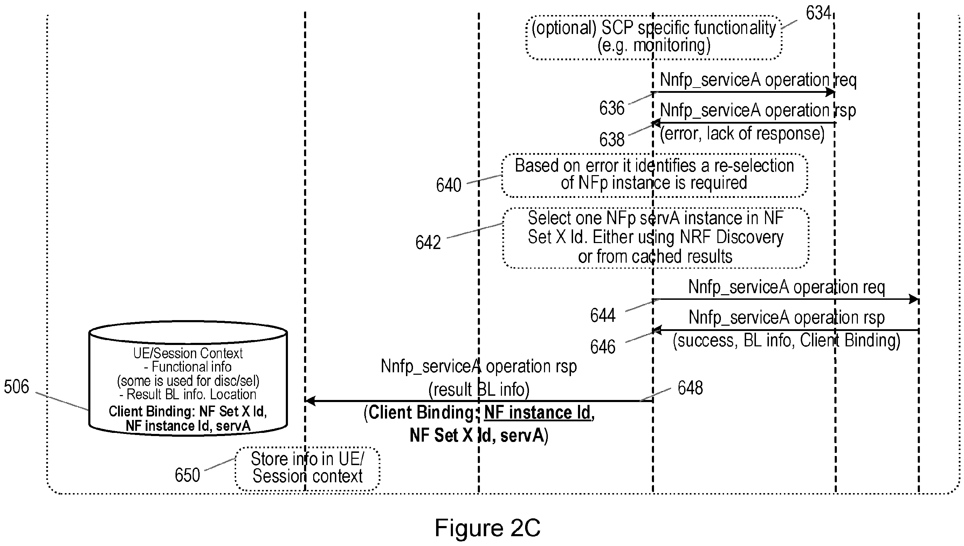

Figure 2A-C is a signalling diagram illustrating an exchange of signals in an existing system, such as the system illustrated in Figure 1D but it will be understood the issue described can also apply to the system illustrated in Figure 1C. The system illustrated in Figure 2A-C comprises a first SCP node 10, a first NF node 20 of a service consumer ("NFc"), a second NF node 30 of a service producer ("NFp1"), and a third NF node 70 of a service producer ("NFp2"). The first SCP node 10 is configured to operate as an SCP between the first NF node 20 and the second NF node 30. The second NF node 30 can provide (e.g. be configured to execute or run) a service 40 and the third NF node 70 can provide (e.g. be configured to execute or run) a service 80. The second NF node 30 and the third NF node 70 can provide (e.g. be configured to execute or run) the same service or a different service. The second NF node 30 and the third NF node 70 can be part of a set 402 of NF nodes of a service producer. The system illustrated in Figure 2A-C also comprises a network repository function node 60.

In Figure 2A-C, steps 600-624 relate to a first request for a user equipment (UE)/session context. As illustrated by block 500 of Figure 2A-C, the UE/session context may be stored. As illustrated by block 600 of Figure 2A-C, the first NF node 20 determines what discovery (and selection) parameters to use. More specifically, the first NF node 20 identifies the discovery parameters to include in the request. The discovery parameters are those that allow the first SCP node 10 to select the required NF node of the service producer. The discovery parameters can be associated with a certain service in a received request, which is not illustrated in Figure 2A-C. As illustrated by blocks 502 and 602 of Figure 2A-C, the first NF node 20 stores the UE/session context for the request received. This storage may be cached or externally stored.

As illustrated by arrow 604 of Figure 2A-C, the first NF node 20 initiates transmission of a service request towards the first SCP node 10. Herein, this service request may be referred to as the "first request" 604. The service request 604 is for an NF node to provide a first service 40 requested by the first NF node 20. The first NF node 20 may know via which SCP node to route the service request by configuration or other means. The first request comprises the address of this SCP node. In this illustration, this SCP node is the first SCP node 10. The discovery parameters are included in the service request. For example, the service request can comprise a hypertext transfer protocol (HTTP) header that identifies the parameters to be used for discovery and selection.

As illustrated by arrow 606 of Figure 2A-C, the first SCP node 10 initiates transmission of a discovery request to the NRF node 60 to obtain NF profile(s) of one or more NF nodes of the service producer for the service that needs to be executed. The discovery request comprises the received discovery parameters. As illustrated by arrow 608 of Figure 2A-C, the first SCP node 10 receives a response from the NRF node 60 comprising the NF profile(s) of one or more NF nodes of the service producer. As illustrated by block 610 of Figure 2A-C, the first SCP node 10 selects one NF node of the service producer from the one(s) discovered using, for example, functional criteria (e.g. subscription permanent identifier (SUPI), network slice selection assistance information (NSSAI), data network name (DNN), etc.) and/or non-functional criteria (e.g. load, capacity, etc.). For the purpose of the illustration, it is assumed that the first SCP node 10 selects the second NF node 30.

As illustrated by block 612 of Figure 2A-C, the first SCP node 10 replaces its own address (namely, the scp-address) in the received service request with the address of the selected second NF node 30. As illustrated by block 614 of Figure 2A-C, the first SCP node 10 may perform any extra functionality, such as monitoring and/or tracing. As illustrated by arrow 616 of Figure 2A-C, the first SCP node 10 initiates transmission of the service request towards the selected second NF node 30. Here, the service request is for the second NF node 30 to provide the first service 40 requested by the first NF node 20.

As illustrated by arrow 618 of Figure 2A-C, the first SCP node 10 receives a response. Herein, this response may be referred to as the "first response" 618. The response 618 can comprise the result (e.g. that the service request is successful), some business logic (BL) information (e.g. as a result of providing the service), location information, and/or binding information. The location information is information indicative of a location of the resource in the second NF node 30 used when providing the first service 40. The second NF node 30 supports binding and thus includes binding information in the response, e.g. in a header of the response. The binding information is intended to be used by the first NF node 20 in subsequent requests. As illustrated by block 620 of Figure 2A-C, the first SCP node 10 has no means to check whether the first NF node 20 actually supports binding or not. As such, the first SCP node 10 needs to act in the same way irrespective of whether the first NF node 20 actually supports binding or not.

As illustrated by arrow 622 of Figure 2A-C, the first SCP node 10 initiates transmission of the response towards the first NF node 20. As illustrated by blocks 504 and 624 of Figure 2A-C, the first NF node 20 can store the information comprised in the response, e.g. the result, the BL information, the location information, and/or the binding information. The information comprised in the response can be stored with the UE/session context.

In Figure 2A-C, steps 626-650 relate to subsequent service requests for an existing UE/Session context. As illustrated by block 626 of Figure 2A-C, another request (not illustrated) to execute a service is received by the first NF node 20 and this service request is identified to correspond to the same UE/session context in respect of which the earlier request was received. The first NF node 20 can, for example, determine the corresponding UE/session context based on the BL information. As illustrated by block 628 of Figure 2A-C, if the first NF node 20 supports binding, the first NF node 20 retrieves the binding information for the UE/session context. The first NF node 20 copies the binding information to routing binding, which is included in a subsequent service request. On the other hand, if the first NF node 20 does not support binding, the binding information will be lost. As also illustrated by block 628 of Figure 2A-C, the first NF node 20 extracts, from the location information, an address of the second NF node 30. The address of the second NF node 30 may be an application programming interface (API) root of a uniform resource identifier (URI) used to reach of the second NF node 30 (i.e. the sbi-target-apiroot). The first NF node 20 includes, in a subsequent service request, the binding information (if the first NF node 20 actually supports binding) and the address of the second NF node 30.

As illustrated by arrow 630 of Figure 2A-C, the first NF node 20 initiates transmission of the subsequent service request towards the first SCP node 10. Herein, this subsequent service request may be referred to as the "subsequent second request". The subsequent service request is for an NF node to provide a second service 40, 80 requested by the first NF node 20, which may be the same or a different service to the first service 40. The first NF node 20 may know via which SCP (e.g. in this illustration, the first SCP node 10) to route the service request by configuration or other means. As mentioned earlier, the subsequent service request can comprise the address of the second NF node 30 (e.g. the sbi-target-apiroot). A hypertext transfer protocol (HTTP) header can comprise this address. As illustrated by block 632 of Figure 2A-C, the first SCP node 10 replaces its own address (namely, the scp-address) in the received subsequent service request with the address of the second NF node 30 (e.g. the sbi-target-apiroot). As illustrated by block 634 of Figure 2A-C, the first SCP node 10 may perform any extra functionality, such as monitoring and/or tracing.

As illustrated by arrow 636 of Figure 2A-C, the first SCP node 10 initiates transmission of the subsequent service request towards the second NF node 30. Here, the service request is for the second NF node 30 to provide the second service 40, 80 requested by the first NF node 20. As illustrated by arrow 638 of Figure 2A-C, there is an error response or a lack of response from the second NF node 30. As illustrated by block 640 of Figure 2A-C, the first SCP node 10 identifies that a reselection of NF node is required, e.g. based on the error. As illustrated by block 642 of Figure 2A-C, if the subsequent service request comprises binding information, the first SCP node 10 is able to perform a reselection. Thus, in this case, the first SCP node 10 uses the binding information to select another NF node of the service producer, e.g. in the same set as the second NF node 30. The selection can either be made using discovery (in a similar manner as described earlier with reference to steps 606-608) or from discovery results previously stored at the first SCP node 10. On the other hand, if the subsequent service request does not comprise binding information (because the first NF node 20 does not support binding), the first SCP node 10 will be unable to perform a reselection, since it does not have the information (e.g. an identifier of the NF set comprising the second NF node 30) available to it in order to do so. For the purpose of the illustration, it is assumed that the subsequent service request comprises binding information and the first SCP node 10 selects the third NF node 70.

As illustrated by arrow 644 of Figure 2A-C, the first SCP node 10 initiates transmission of the second request towards the third NF node 70 for the third NF node 70 to provide the service 80. As illustrated by arrow 646 of Figure 2A-C, the first SCP node 10 receives a response to the second request from the third NF node 70. As in the illustration, the response can be indicative that the result is that the subsequent second request is successful. The response can comprise some business logic (BL) information and/or binding information. As illustrated by arrow 648 of Figure 2A-C, the first SCP node 10 initiates transmission of the response to the first NF node 20. As illustrated by blocks 506 and 650 of Figure 2A-C, the first NF node 20 stores the information comprised in the response.

Thus, the procedure is successful when the first NF node 20 supports binding, but unsuccessful when the first NF node 20 does not support binding. CN 110 830 543 A discloses an architecture according to which a first service instance (service consumer) registers in the NRF whether the ability to select a service instance from a service set is supported, so that a second service instance (service producer) can obtain from the NRF whether the first service instance supports load balancing based on the service set.

### Summary

As mentioned earlier, the procedure illustrated in Figure 2A-C is unsuccessful when the first NF node 20 does not support binding. In particular, the first SCP node 10 does not have the means to select a different NF node of the service producer to be able to fulfil the subsequent second service request. The subsequent second service request is thus unsuccessful in this case. The first SCP node 10 or the second NF node 30 need to behave differently depending on the behaviour of the first NF node 20 to be able to counteract this. However, the first NF node 20 does not register its behaviour or any NF profile with the NRF node 60 if it is only acting as an NF node of the service consumer and not also acting as an NF node of the service producer. As such, the first SCP node 10 and the second NF node 30 are unable to determine the features that are supported by the first NF node 20.

It is an object of the disclosure to obviate or eliminate at least some of the above-described disadvantages associated with existing techniques.

Therefore, objects of the present invention are methods and apparatuses according to the appended independent claims. Preferred embodiments are covered by the appended dependent claims.

### Brief description of the drawings

For a better understanding of the technique, and to show how it may be put into effect, reference will now be made, by way of example, to the accompanying drawings, in which:
Figure 1A-D is a block diagram illustrating different existing systems;
Figure 2A-C is a signalling diagram illustrating an exchange of signals in an existing system;
Figure 3 is a block diagram illustrating a first network node according to an embodiment;
Figure 4 is a flowchart illustrating a method performed by a first network node according to an embodiment;
Figure 5 is a block diagram illustrating a second network node according to an embodiment;
Figure 6 is a flowchart illustrating a method performed by a second network node according to an embodiment;
Figure 7A-B is a signalling diagram illustrating an exchange of signals in a system according to an embodiment;
Figure 8A-B is a signalling diagram illustrating an exchange of signals in a system according to an embodiment;
Figure 9 is a block diagram illustrating a first network node according to an embodiment; and
Figure 10 is a block diagram illustrating a second network node according to an embodiment.

### Detailed Description

Herein, techniques for handling a service request in a network are described. A service request can also be referred to as a request for a service. Generally, a service is software intended to be managed for users. Herein, a service can be any type of service, such as a communication service (e.g. a notification service or a callback service), a context management (e.g. user equipment context management (UECM)) service, a data management (DM) service, or any other type of service. The techniques described herein can be used in respect of any network, such as any communications or telecommunications network, e.g. cellular network. The network may be a fifth generation (5G) network or any other generation network. In some embodiments, the network may be a core network or a radio access network (RAN). The techniques described herein are implemented by a first service communication proxy (SCP) node and a first network function (NF) node.

An NF is a third generation partnership project (3GPP) adopted or 3GPP defined processing function in a network, which has defined functional behaviour and 3GPP defined interfaces. An NF can be implemented either as a network element on a dedicated hardware, as a software instance running on a dedicated hardware, or as a virtualised function instantiated on an appropriate platform, e.g. on a cloud infrastructure. Herein, the term "node" in relation to an "NF node" will be understood to cover each of these scenarios.

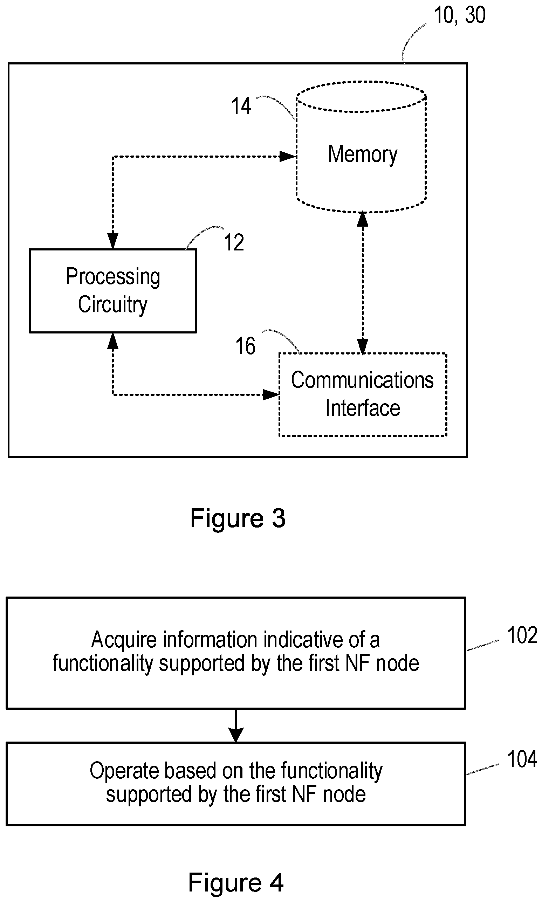

**Figure** 3 illustrates a first network node 10, 30 in accordance with an embodiment. The first network node 10, 30 can be a first service communication proxy (SCP) node 10 configured to operate as an SCP between a first network function (NF) node of a service consumer and a second NF node of a service producer in the network. Alternatively, the first network node 10, 30 can be the second NF node 30. In some embodiments, the first network node 10, 30 can be, for example, be a physical machine (e.g. a server) or a virtual machine (VM).

As illustrated in Figure 3, the first network node 10, 30 comprises processing circuitry (or logic) 12. The processing circuitry 12 controls the operation of the first network node 10, 30 and can implement the method described herein in respect of the first network node 10, 30. The processing circuitry 12 can be configured or programmed to control the first network node 10, 30 in the manner described herein. The processing circuitry 12 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the first network node 10, 30. In some embodiments, the processing circuitry 12 can be configured to run software to perform the method described herein in respect of the first network node 10, 30. The software may be containerised according to some embodiments. Thus, in some embodiments, the processing circuitry 12 may be configured to run a container to perform the method described herein in respect of the first network node 10, 30.

Briefly, the processing circuitry 12 of the first network node 10, 30 is configured to, in response to receiving a first request transmitted towards the second NF node via the first SCP node, acquire information indicative of a functionality supported by the first NF node. The first request is for the second NF node to provide (e.g. execute or run) a first service requested by the first NF node. The processing circuitry 12 of the first network node 10, 30 is configured to operate based on the functionality supported by the first NF node.

As illustrated in Figure 3, in some embodiments, the first network node 10, 30 may optionally comprise a memory 14. The memory 14 of the first network node 10, 30 can comprise a volatile memory or a non-volatile memory. In some embodiments, the memory 14 of the first network node 10, 30 may comprise a non-transitory media. Examples of the memory 14 of the first network node 10, 30 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 12 of the first network node 10, 30 can be connected to the memory 14 of the first network node 10, 30. In some embodiments, the memory 14 of the first network node 10, 30 may be for storing program code or instructions which, when executed by the processing circuitry 12 of the first network node 10, 30, cause the first network node 10, 30 to operate in the manner described herein in respect of the first network node 10, 30. For example, in some embodiments, the memory 14 of the first network node 10, 30 may be configured to store program code or instructions that can be executed by the processing circuitry 12 of the first network node 10, 30 to cause the first network node 10, 30 to operate in accordance with the method described herein in respect of the first network node 10, 30. Alternatively or in addition, the memory 14 of the first network node 10, 30 can be configured to store any information, data, messages, requests, responses, indications, notifications, signals, or similar, that are described herein. The processing circuitry 12 of the first network node 10, 30 may be configured to control the memory 14 of the first network node 10, 30 to store information, data, messages, requests, responses, indications, notifications, signals, or similar, that are described herein.

In some embodiments, as illustrated in Figure 3, the first network node 10, 30 may optionally comprise a communications interface 16. The communications interface 16 of the first network node 10, 30 can be connected to the processing circuitry 12 of the first network node 10, 30 and/or the memory 14 of first network node 10, 30. The communications interface 16 of the first network node 10, 30 may be operable to allow the processing circuitry 12 of the first network node 10, 30 to communicate with the memory 14 of the first network node 10, 30 and/or vice versa. Similarly, the communications interface 16 of the first network node 10, 30 may be operable to allow the processing circuitry 12 of the first network node 10, 30 to communicate with a second network node and/or any other node. The communications interface 16 of the first network node 10, 30 can be configured to transmit and/or receive information, data, messages, requests, responses, indications, notifications, signals, or similar, that are described herein. In some embodiments, the processing circuitry 12 of the first network node 10, 30 may be configured to control the communications interface 16 of the first network node 10, 30 to transmit and/or receive information, data, messages, requests, responses, indications, notifications, signals, or similar, that are described herein.

Although the first network node 10, 30 is illustrated in Figure 3 as comprising a single memory 14, it will be appreciated that the first network node 10, 30 may comprise at least one memory (i.e. a single memory or a plurality of memories) 14 that operate in the manner described herein. Similarly, although the first network node 10, 30 is illustrated in Figure 3 as comprising a single communications interface 16, it will be appreciated that the first network node 10, 30 may comprise at least one communications interface (i.e. a single communications interface or a plurality of communications interface) 16 that operate in the manner described herein. It will also be appreciated that Figure 3 only shows the components required to illustrate an embodiment of the first network node 10, 30 and, in practical implementations, the first network node 10, 30 may comprise additional or alternative components to those shown.

**Figure 4** is a flowchart illustrating a method performed by a first network node 10, 30 in accordance with an embodiment. The method is for operating the first network node 10, 30. As mentioned earlier, the first network node 10, 30 can be a first SCP node 10 configured to operate as an SCP between a first NF node of a service consumer and a second NF node of a service producer in the network. Alternatively, the first network node 10, 30 can be the second NF node 30. The first network node 10, 30 described earlier with reference to Figure 3 is configured to operate in accordance with the method of Figure 4. The method can be performed by or under the control of the processing circuitry 12 of the first network node 10, 30.

The method is performed in response to receiving a first request transmitted towards the second NF node via the first SCP node. The first request is for the second NF node to provide (e.g. execute or run) a first service requested by the first NF node. As illustrated at block 102 of Figure 4, information indicative of a functionality supported by the first NF node is acquired. As illustrated at block 104 of Figure 4, the first network node operates based on the functionality supported by the first NF node. The information can be acquired in a variety of ways. For example, the information may be acquired from a network repository function (NRF) node, the first NF node, and/or a memory (e.g. a memory 14 of the first network node 10, 30 or another memory).

In some embodiments where the information is acquired from an NRF node, the first request received at the first network node 10, 30 may comprise one or more identifiers that allow the first NF node 20 to be (e.g. uniquely) identified and acquiring the information from the NRF node may comprise acquiring the information from the NRF node 60 using the one or more identifiers. In some embodiments, acquiring the information from the NRF node may comprise acquiring the information from a profile of the first NF node stored at the NRF node. In some embodiments, acquiring the information from the NRF node may comprise initiating transmission of a second request for the information towards the NRF node. In some embodiments, acquiring the information from the NRF node may comprise receiving the information from the NRF node.

In some embodiments where the information is acquired from the first NF node, the first request received at the first network node 10, 30 may comprise the information and acquiring the information from the first NF node may comprise acquiring the information from the first request. In some embodiments, a header of the first request received at the first network node 10, 30 may comprise the information. In some embodiments, the header of the first request may be a hypertext transfer protocol (HTTP) header. This header is a new header, i.e. a header that is not currently included in the first request according to existing techniques. The header can be a custom header.

In some embodiments where the information is acquired from a memory, the information stored in the memory may be from a third request transmitted towards the second NF node 30 via the first SCP node 10. The third request can be for the second NF node 30 to provide the first service requested by the first NF node. The third request is received at the first network node 10, 30 prior to the first request. In some embodiments, in response to receiving the third request comprising the information, the method may comprise controlling the memory to store the information from the third request. In some embodiments, a header of the third request may comprise the information. In some embodiments, the header of the third request may be a hypertext transfer protocol (HTTP) header. This header is a new header, i.e. a header that is not currently included in the third request according to existing techniques. The header can be a custom header.

In some embodiments, the first SCP node 10 may acquire the information in any of the ways described earlier and the second NF node 30 may acquire the information from the first SCP node 10. For example, the first SCP node 10 may initiate transmission of the information towards the second NF node 30 according to some embodiments. In these embodiments, the second NF node 30 acquires the information by receiving the information from the first SCP node 10.

In an example, the acquired information referred to herein may be indicative of whether or not the first NF node 20 supports binding and the first network node 10, 30 can operate based on whether or not binding is supported by the first NF node 20. For example, the first network node 10, 30 may include binding information in a response to a request received from the first NF node 20 if the acquired information is indicative that the first NF node 20 supports binding and/or may omit binding information from the response to the request received from the first NF node 20 if the acquired information is indicative that the first NF node 20 does not support binding. Thus, more generally, the first network node 10, 30 may provide the first NF node 20 with information that the first NF node 20 can actually use.

In another example, the acquired information referred to herein may be indicative of whether or not the first NF node 20 supports management of load provided by one or more NF nodes of the service producer (e.g. the second NF node 30, the third NF node 70, and/or any other NF nodes of the service producer) and the first network node 10, 30 can operate based on whether or not load management is supported by the first NF node 20. For example, the first network node 10, 30 may handle the load management (e.g. load balancing) if the acquired information is indicative that the first NF node 20 does not support load management.

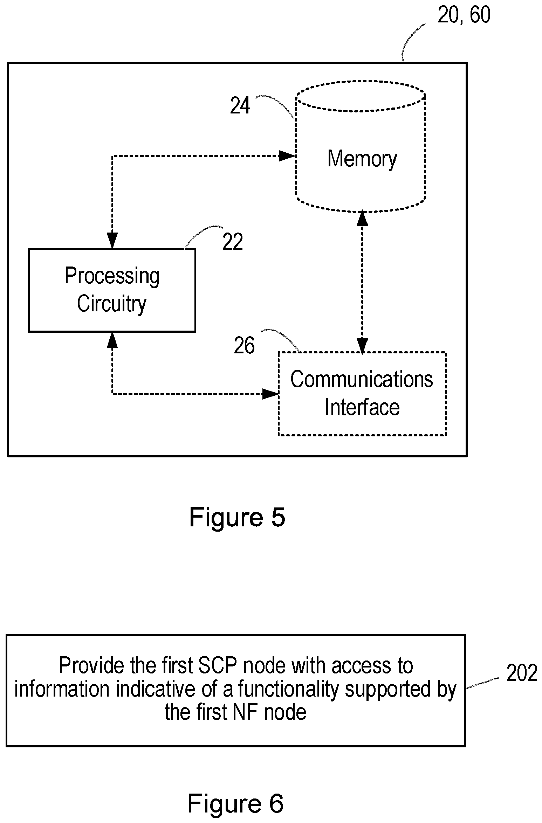

**Figure 5** illustrates a second network node 20, 60 of a service consumer in accordance with an embodiment. The second network node 20, 60 can be a first NF node 20 of a service consumer or a network repository function (NRF) node 60. The second network node 20, 60 is for providing information to the first network node 10, 30. As mentioned earlier, the first network node 10, 30 is a first SCP node 10 configured to operate as an SCP between the first NF node 20 and a second NF node 30 of a service producer in the network, or the first network node 10, 30 is the second NF node 30. In some embodiments, the second network node 20, 60 can be, for example, be a physical machine (e.g. a server) or a virtual machine (VM). Where the second network node 20, 60 is a first NF node 20, the second network node can be, for example, a user equipment (UE).

As illustrated in Figure 5, the second network node 20, 60 comprises processing circuitry (or logic) 22. The processing circuitry 22 controls the operation of the second network node 20, 60 and can implement the method described herein in respect of the second network node 20, 60. The processing circuitry 22 can be configured or programmed to control the second network node 20, 60 in the manner described herein. The processing circuitry 22 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the second network node 20, 60. In some embodiments, the processing circuitry 22 can be configured to run software to perform the method described herein in respect of the second network node 20, 60. The software may be containerised according to some embodiments. Thus, in some embodiments, the processing circuitry 22 may be configured to run a container to perform the method described herein in respect of the second network node 20, 60.

Briefly, the processing circuitry 22 of the second network node 20, 60 is configured to, provide the first network node 10, 30 with access to information indicative of a functionality supported by the first NF node to allow the first network node 10, 30 to operate based on the functionality supported by the first NF node.

As illustrated in Figure 5, in some embodiments, the second network node 20, 60 may optionally comprise a memory 24. The memory 24 of the second network node 20, 60 can comprise a volatile memory or a non-volatile memory. In some embodiments, the memory 24 of the second network node 20, 60 may comprise a non-transitory media. Examples of the memory 24 of the second network node 20, 60 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 22 of the second network node 20, 60 can be connected to the memory 24 of the second network node 20, 60. In some embodiments, the memory 24 of the second network node 20, 60 may be for storing program code or instructions which, when executed by the processing circuitry 22 of the second network node 20, 60, cause the second network node 20, 60 to operate in the manner described herein in respect of the second network node 20, 60. For example, in some embodiments, the memory 24 of the second network node 20, 60 may be configured to store program code or instructions that can be executed by the processing circuitry 22 of the second network node 20, 60 to cause the second network node 20, 60 to operate in accordance with the method described herein in respect of the second network node 20, 60. Alternatively or in addition, the memory 24 of the second network node 20, 60 can be configured to store any information, data, messages, requests, responses, indications, notifications, signals, or similar, that are described herein. The processing circuitry 22 of the second network node 20, 60 may be configured to control the memory 24 of the second network node 20, 60 to store information, data, messages, requests, responses, indications, notifications, signals, or similar, that are described herein.

In some embodiments, as illustrated in Figure 5, the second network node 20, 60 may optionally comprise a communications interface 26. The communications interface 26 of the second network node 20, 60 can be connected to the processing circuitry 22 of the second network node 20, 60 and/or the memory 24 of second network node 20, 60. The communications interface 26 of the second network node 20, 60 may be operable to allow the processing circuitry 22 of the second network node 20, 60 to communicate with the memory 24 of the second network node 20, 60 and/or vice versa. Similarly, the communications interface 26 of the second network node 20, 60 may be operable to allow the processing circuitry 22 of the second network node 20, 60 to communicate with the first network node 10, 30 and/or any other node. The communications interface 26 of the second network node 20, 60 can be configured to transmit and/or receive information, data, messages, requests, responses, indications, notifications, signals, or similar, that are described herein. In some embodiments, the processing circuitry 22 of the second network node 20, 60 may be configured to control the communications interface 26 of the second network node 20, 60 to transmit and/or receive information, data, messages, requests, responses, indications, notifications, signals, or similar, that are described herein.

Although the second network node 20, 60 is illustrated in Figure 5 as comprising a single memory 24, it will be appreciated that the second network node 20, 60 may comprise at least one memory (i.e. a single memory or a plurality of memories) 24 that operate in the manner described herein. Similarly, although the second network node 20, 60 is illustrated in Figure 5 as comprising a single communications interface 26, it will be appreciated that the second network node 20, 60 may comprise at least one communications interface (i.e. a single communications interface or a plurality of communications interface) 26 that operate in the manner described herein. It will also be appreciated that Figure 5 only shows the components required to illustrate an embodiment of the second network node 20, 60 and, in practical implementations, the second network node 20, 60 may comprise additional or alternative components to those shown.

**Figure 6** is a flowchart illustrating a method performed by a second network node 20, 60 in accordance with an embodiment. The method of Figure 6 is for providing information to the first network node 10, 30. The second network node 20, 60 described earlier with reference to Figure 5 is configured to operate in accordance with the method of Figure 6. The method can be performed by or under the control of the processing circuitry 22 of the second network node 20, 60.

As illustrated at block 202 of Figure 6, the first network node 10, 30 is provided with access to information indicative of a functionality supported by the first NF node to allow the first network node 10, 30 to operate based on the functionality supported by the first NF node. The information can be provided in a variety of ways.

For example, in an embodiment where the second network node 20, 60 is an NRF node 60, the NRF node 60 may provide the first network node 10, 30 with access to the information by providing the first network node 10, 30 with access to a profile of the first NF node stored at the NRF node 60. In this embodiment, the profile of the first NF node comprises the information. Thus, the profile of the first NF node comprises a new attribute by way of this information, i.e. an attribute that is not currently included in the profile of an NF node of a consumer according to existing techniques.

In some embodiments, the NRF node 60 may provide the first network node 10, 30 with access to the information in response to receiving a second request for the information. In some embodiments, the NRF node 60 may provide the first network node 10, 30 with access to the information by initiating transmission of the information towards first network node 10, 30. In some embodiments, the method performed by the NRF node 60 may comprise receiving a registration request from the first NF node and the registration request can comprise the information.

In an embodiment where the second network node 20, 60 is the first NF node 20, the method performed by the first NF node 20 may comprise initiating transmission of a first request towards the second NF node 30 via the first SCP node 10. The first request can be for the second NF node 30 to provide (e.g. execute or run) a first service requested by the first NF node 20. In some embodiments, the first NF node 20 may provide the first network node 10, 30 with access to the information by the first request comprising the information. In some embodiments, a header of the first request may comprise the information. In some embodiments, the header of the first request may be a hypertext transfer protocol (HTTP) header, such as a new 3GPP specific HTTP header. Alternatively or in addition, in some embodiments, the first NF node 20 may provide the first network node 10, 30 with access to the information by the first request comprising one or more identifiers that allow the first NF node 20 to be (e.g. uniquely) identified. In these embodiments, the one or more identifiers are for use by the first network node 10, 30 to acquire the information from the NRF node 60.

The first request referred to herein may be an initial request or a subsequent request. In some embodiments, the information may be comprised in the initial request only. In these embodiments, the first network node 10, 30 may store the information. Alternatively, in some embodiments, the information may be comprised in all requests, i.e. the initial request and all subsequent requests.

In some embodiments, the first NF node 20 may provide the first network node 10, 30 with access to the information by, prior to initiating transmission of the first request, initiating transmission of a third request towards the second NF node 30 via the first SCP node 10. In these embodiments, the third request comprises the information. The third request can be for the second NF node 30 to provide (e.g. execute or run) a first service requested by the first NF node 20. In some embodiments, a header of the third request may comprise the information. In some embodiments, the header of the third request may be a hypertext transfer protocol (HTTP) header. In embodiments involving a third request, the third request referred to herein may be the initial request and the first request may be a subsequent request, such that all requests comprise the information.

There is also provided a system. The system can comprise at least one first network node 10, 30 as described herein and/or at least one second network node 20, 60 as described herein. For example, the system can comprise at least one first SCP node 10 configured to operate in the manner described herein in respect of the first network node, at least one second NF node 30 configured to operate in the manner described herein in respect of the first network node, at least one first NF node 20 as described herein in respect of the second network node, and/or at least one NRF node 60 as described herein in respect of the second network node. The system may also comprise any one or more of the other nodes mentioned herein.

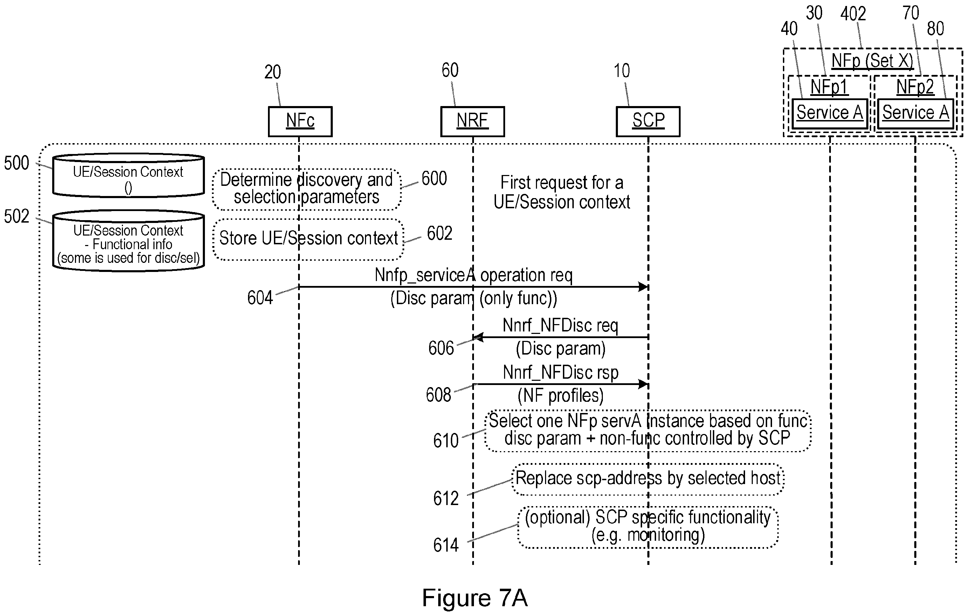

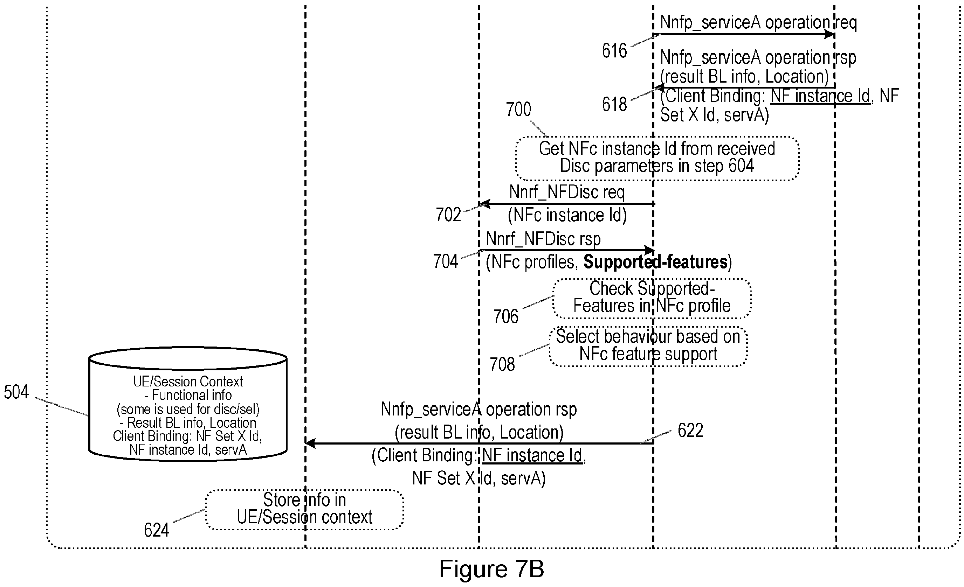

Figure 7A-B is a signalling diagram illustrating an exchange of signals in a system according to an embodiment. The system illustrated in Figure 7A-B comprises a first SCP node 10 and an NRF node 60. The first SCP node 10 can be as described earlier with reference to Figures 3 and 4. The NRF node 60 can be as described earlier with reference to Figures 5 and 6. In some embodiments, an entity may comprise the first SCP node 10 and the NRF node 60. That is, in some embodiments, the first SCP node 10 can be merged with the NRF node 60 in a combined entity.

The system illustrated in Figure 7A-B comprises a first NF node 20 of a service consumer ("NFc"), a second NF node 30 of a service producer ("NFp1") and a third NF node 70 of a service producer ("NFp2"). The first SCP node 10 is configured to operate as an SCP between the first NF node 20 and the second NF node 30. The first SCP node 10 is also configured to operate as an SCP between the first NF node 20 and the third NF node 70. The second NF node 30 can be configured to provide (e.g. execute or run) a service 40. The third NF node 70 can be configured to provide (e.g. execute or run) a service 80. The second NF node 30 and the third NF node 70 can provide (e.g. be configured to execute or run) the same service (e.g. different instances of the same service) or a different service. The second NF node 30 and the third NF node 70 can be part of a set 402 of NF nodes of a service producer.

In some embodiments, the first SCP node 10 and the first NF node 20 may be deployed in independent deployment units, the first SCP node 10 and the second NF node 30 may be deployed in independent deployment units, and/or the first SCP node 10 and the third NF node 70 may be deployed in independent deployment units. Thus, an SCP node based on independent deployment units is possible, as described in 3GPP TS 23.501 V16.4.0. In other embodiments, the first SCP node 10 may be deployed as a distributed network element. For example, in some embodiments, part (e.g. a service agent) of the first SCP node 10 may be deployed in the same deployment unit as the first NF node 20, part (e.g. a service agent) of the first SCP node 10 may be deployed in the same deployment unit as the second NF node 30, and/or part (e.g. a service agent) of the first SCP node 10 may be deployed in the same deployment unit as the third NF node 70. Thus, an SCP node based on service mesh is possible, as described in 3GPP TS 23.501 V16.4.0.

In some embodiments, at least one second SCP node may be configured to operate as an SCP between the first NF node 20 and the first SCP node 10, at least one third SCP node may be configured to operate as an SCP between the first SCP node 10 and the second NF node 30, and/or at least one fourth SCP node may be configured to operate as an SCP between the first SCP node 10 and the third NF node 70. Thus, a multipath of SCP nodes is possible. In some of these embodiments, the first SCP node 10 and one or more of the at least one at least one second SCP node, the at least one third SCP node, and the at least one fourth SCP node may be deployed in independent deployment units. In some embodiments, the at least one second SCP node and/or the at least one third SCP node may be deployed as distributed network elements.

Steps 500-502 and 600-618 of Figure 7A-B are as described earlier with reference to Figure 2A-C. As mentioned earlier, the first response 618 can comprise binding information according to some embodiments.

Herein, binding information can be any information that is indicative of one or more parameters by which the first NF node 20 is bound when selecting a second service 40, 80 in an NF node 30, 70 of a service producer for a subsequent second request. The subsequent second request can be a subsequent second request that follows the first (or third) request directly, or a subsequent second request that follows the first (or third) request indirectly, e.g. it may be a request that follows another one or more requests that follow the first (or third) request. In some embodiments, the subsequent second request may be linked to the first service 40. For example, the subsequent second request may be associated with a resource used to provide the first service 40. The first service 40 and the second service 40 may be the same service, or the first service 40 and the second service 80 may be different services. The term "binding information" is well-recognised in the art and thus a person skilled in the art will be aware of various parameters that may be indicated by the binding information referred to herein. Nevertheless, some examples will be provided for completeness.

For example, in some embodiments, the one or more parameters may comprise a parameter that binds the first NF node 20 to selecting the second service 40, 80 in the second NF node 30 for the subsequent second request, or a parameter that binds the first NF node 20 to selecting the second service 40, 80 in a third NF node 70 for the subsequent second request. In some embodiments, the parameter that binds the first NF node 20 to selecting the second service 40, 80 in the second NF node 30 for the subsequent second request comprises an identifier that (e.g. uniquely) identifies the second NF node 30 and/or the parameter that binds the first NF node 20 to selecting the second service 40, 80 in the third NF node 70 for the subsequent second request comprises an identifier that (e.g. uniquely) identifies the set 402 of NF nodes. In some embodiments, the binding information can comprise an identifier that (e.g. uniquely) identifies the second NF node 30 (or the selected instance of the second NF node 30, e.g. NFp instance Id), an identifier that (e.g. uniquely) identifies the set 402 of NF nodes that comprises the second NF node 30 (e.g. NFp Set X Id), and a name of the first service 40 (e.g. Service A). Other examples of one or more parameters that the binding information may comprise are those in Table 6.3.1.0-1 of 3GPP TS 23.501 V16.5.0.

Returning back to Figure 7A-B, in the embodiment illustrated, features supported by the first NF node 20 acting as a service consumer are defined at NF level. The features may be referred to in the art as "supported features". The supported features identify the functionality that is supported by the first NF node 20 acting as a service consumer. The supported features can be included in an NF profile of the first NF node 20 acting as a service consumer. The same supported features attribute is used in existing techniques at the service level only to indicate the features that are supported by an NF node acting as a service producer.

Thus, with reference to Figure 7A-B, as illustrated by block 700 and arrows 702-704, the first SCP node 10 acquires information indicative of a functionality supported by the first NF node 20. That is, the first SCP node 10 acquires information on the supported features mentioned earlier. The information is acquired in response to receiving the first request 604 transmitted towards the second NF node 30 via the first SCP node 10. As mentioned previously, the first request 604 is for the second NF node 30 to provide (e.g. execute or run) a first service 40 requested by the first NF node 20. In the illustrated embodiment of Figure 7A-B, the information is acquired from the NRF node 60. The NRF node 60 may, for example, have received a registration request from the first NF node 20, which comprised the information. The NRF node 60 may store the information.

In more detail, the first request 604 received at the first SCP node 10 comprises one or more identifiers (e.g. the NF instance Id of the first NF node 20) that allow the first NF node 20 to be (e.g. uniquely) identified. It can be mandatory for the first request 604 to comprise the one or more identifiers. As illustrated by block 700 of Figure 7A-B, the first SCP node 10 retrieves the one or more identifiers from the first request 604 received at the first SCP node 10. For example, the one or more identifiers may be retrieved from the discovery parameters comprised in the first request 604 received at the first SCP node 10. The first SCP node 10 can then acquire the information from the NRF node 60 using the one or more identifiers.

In particular, as illustrated by arrow 702 of Figure 7A-B, the first SCP node 10 initiates transmission of a second request 702 for the information towards the NRF node 60. The NRF node 60 can provide the first SCP node 10 with access to the information in response to receiving this second request 702 for the information. The second request 702 may comprise the one or more identifiers that allow the first NF node 20 to be identified. In this way, the NRF node 60 can retrieve the information that corresponds to the one or more identifiers and that thus corresponds to the first NF node 20. As illustrated by arrow 704 of Figure 7A-B, the NRF node 60 provides the first SCP node 10 with access to the information by initiating transmission of the information towards first network node 10. The first SCP node 10 receives the information from the NRF node 60. Thus, in some embodiments, the first SCP node 10 can acquire the information through discovery.

In some embodiments, the information can be comprised in a profile of the first NF node 20 stored at the NRF node 60. Thus, in some embodiments, the NRF node 60 can provide the first SCP node 10 with access to the information by providing the first SCP node 10 with access to the profile of the first NF node. The profile of the first NF node 20 may comprise the one or more identifiers, such that the NRF node 60 can identify the profile that belongs to the first NF node 20. It may then be the profile of the first NF node 20 comprising the information that is received by the first SCP node 10. In these embodiments, as illustrated by block 706 of Figure 7A-B, the first SCP node 10 can check the profile of the first NF node 20 to identify the functionality that is supported by the first NF node 20. That is, the first SCP node 10 checks the supported features in the profile of the first NF node 20. The supported features are thus checked at the NF profile level and, more specifically, at NF consumer level.

As illustrated by block 708 of Figure 7A-B, the first SCP node 10 operates (e.g. selects its behaviour) based on the functionality supported by the first NF node 20. That is, the first SCP node 10 operates based on whether or not certain features are supported by the first NF node 20. Steps 504 and 622-624 of Figure 7A-B are as described earlier with reference to Figure 2A-C.

Although the embodiment illustrated in Figure 7A-B is directed to the first SCP node 10, it will be understood that the method described with reference to Figure 7A-B may equally be performed in respect of the second NF node 30.

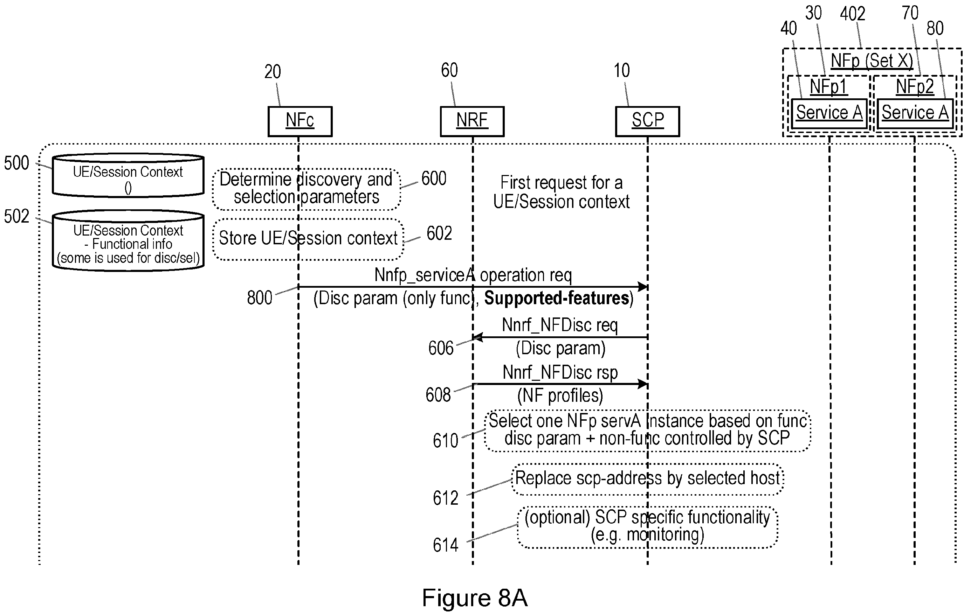

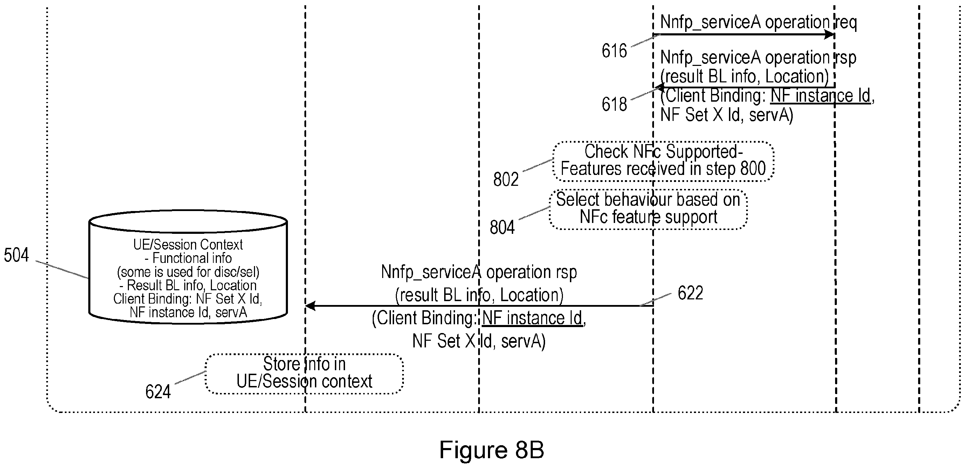

Figure 8A-B is a signalling diagram illustrating an exchange of signals in a system according to an embodiment. The system illustrated in Figure 8A-B comprises a first NF node 20 of a service consumer ("NFc") and a first SCP node 10. The first SCP node 10 can be as described earlier with reference to Figures 3 and 4. The first NF node 20 can be as described earlier with reference to Figures 5 and 6.

The system illustrated in Figure 8A-B comprises a second NF node 30 of a service producer ("NFp1") and a third NF node 70 of a service producer ("NFp2"). The first SCP node 10 is configured to operate as an SCP between the first NF node 20 and the second NF node 30. The first SCP node 10 is also configured to operate as an SCP between the first NF node 20 and the third NF node 70. The second NF node 30 can be configured to provide (e.g. execute or run) a service 40. The third NF node 70 can be configured to provide (e.g. execute or run) a service 80. The second NF node 30 and the third NF node 70 can provide (e.g. be configured to execute or run) the same service (e.g. different instances of the same service) or a different service. The second NF node 30 and the third NF node 70 can be part of a set 402 of NF nodes of a service producer. The system illustrated in Figure 8A-B comprises an NRF node 60. In some embodiments, an entity may comprise the first SCP node 10 and the NRF node 60. That is, in some embodiments, the first SCP node 10 can be merged with the NRF node 60 in a combined entity.

In some embodiments, the first SCP node 10 and the first NF node 20 may be deployed in independent deployment units, the first SCP node 10 and the second NF node 30 may be deployed in independent deployment units, and/or the first SCP node 10 and the third NF node 70 may be deployed in independent deployment units. Thus, an SCP node based on independent deployment units is possible, as described in 3GPP TS 23.501 V16.4.0. In other embodiments, the first SCP node 10 may be deployed as a distributed network element. For example, in some embodiments, part (e.g. a service agent) of the first SCP node 10 may be deployed in the same deployment unit as the first NF node 20, part (e.g. a service agent) of the first SCP node 10 may be deployed in the same deployment unit as the second NF node 30, and/or part (e.g. a service agent) of the first SCP node 10 may be deployed in the same deployment unit as the third NF node 70. Thus, an SCP node based on service mesh is possible, as described in 3GPP TS 23.501 V16.4.0.

In some embodiments, at least one second SCP node may be configured to operate as an SCP between the first NF node 20 and the first SCP node 10, at least one third SCP node may be configured to operate as an SCP between the first SCP node 10 and the second NF node 30, and/or at least one fourth SCP node may be configured to operate as an SCP between the first SCP node 10 and the third NF node 70. Thus, a multipath of SCP nodes is possible. In some of these embodiments, the first SCP node 10 and one or more of the at least one at least one second SCP node, the at least one third SCP node, and the at least one fourth SCP node may be deployed in independent deployment units. In some embodiments, the at least one second SCP node and/or the at least one third SCP node may be deployed as distributed network elements.

Steps 500-502 and 600-602 of Figure 8A-B are as described earlier with reference to Figure 2A-C. In the embodiment illustrated in Figure 8A-B, new information is included in the first request from the first NF node 20, which indicates the features/functionality supported by the first NF node 20. Thus, in the illustrated embodiment of Figure 8A-B, the information is acquired from the first NF node 20. In more detail, as illustrated by arrow 800 of Figure 8A-B, the first NF node 20 initiates transmission of the first request towards the second NF node 30 via the first SCP node 10. As mentioned earlier, the first request is for the second NF node 30 to provide (e.g. execute or run) a first service 40 requested by the first NF node 20. The first NF node 20 provides the first SCP node 10 with access to the information indicative of a functionality supported by the first NF node 20 by the first request 800 comprising the information. In some embodiments, a header (e.g. a HTTP header, such as a new 3GPP specific HTTP header) of the first request 800 can comprise the information. Thus, the first SCP node 10 acquires the information on the supported features from the first request 800.

Steps 606-618 of Figure 8A-B are as described earlier with reference to Figure 2A-C. As illustrated by block 802 of Figure 8A-B, the first SCP node 10 checks the information received in the first request 800 to identify the functionality that is supported by the first NF node 20. That is, the first SCP node 10 checks the supported features. In an embodiment where a header comprises the information, the first SCP node 10 may check a value of the header to identify whether a functionality is supported by the first NF node 20, or the mere presence of the header may indicate that the feature is supported. For example, the header may only be included if the feature is supported.

As illustrated by block 804 of Figure 8A-B, the first SCP node 10 operates (e.g. selects its behaviour) based on the functionality supported by the first NF node 20. That is, the first SCP node 10 operates based on whether or not certain features are supported by the first NF node 20. Steps 504 and 622-624 of Figure 8A-B are as described earlier with reference to Figure 2A-C.

Although the embodiment illustrated in Figure 8A-B is directed to the first SCP node 10, it will be understood that the method described with reference to Figure 8A-B may equally be performed in respect of the second NF node 30.

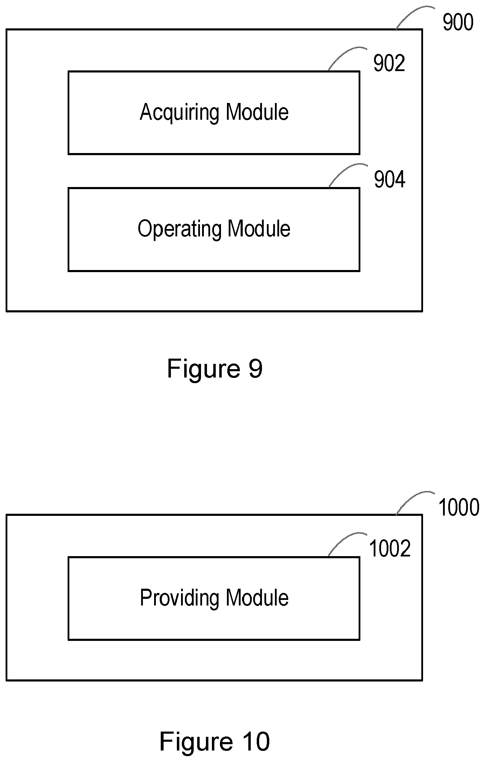

**Figure 9** is a block diagram illustrating a first network node 900 in accordance with an embodiment. The first network node 900 can be a first SCP node that can operate as an SCP between a first NF node of a service consumer and a second NF node of a service producer in the network, or the first network node 900 can be the second NF node. The first network node 900 comprises an acquiring module 902 configured to, in response to receiving a first request transmitted towards the second NF node via the first SCP node, acquire information indicative of a functionality supported by the first NF node. The first request is for the second NF node to provide a first service requested by the first NF node. The first network node 900 comprises an operating module 904 configured to operate based on the functionality supported by the first NF node. The first network node 900 may operate in the manner described herein in respect of the first network node.

**Figure 10** is a block diagram illustrating a second network node 1000 in accordance with an embodiment. The second network node 1000 can be an NRF node or a first NF node of a service consumer. The second network node 1000 can provide information to the first network node 900. The first network node 900 can be a first SCP node configured to operate as an SCP between the first NF node and a second NF node of a service producer in the network, or the first network node 900 can be the second NF node. The second network node 1000 comprises a providing module 1002 configured to provide the first network node 900 with access to information indicative of a functionality supported by the first NF node to allow the first network node 900 to operate based on the functionality supported by the first NF node. The second network node 1000 may operate in the manner described herein in respect of the second network node.

There is also provided a computer program comprising instructions which, when executed by processing circuitry (such as the processing circuitry 12 of the first network node 10, 30 described earlier and/or the processing circuitry 22 of the second network node 20, 60 described earlier), cause the processing circuitry to perform at least part of the method described herein. There is provided a computer program product, embodied on a non-transitory machine-readable medium, comprising instructions which are executable by processing circuitry (such as the processing circuitry 12 of the first network node 10, 30 described earlier and/or the processing circuitry 22 of the second network node 20, 60 described earlier) to cause the processing circuitry to perform at least part of the method described herein. There is provided a computer program product comprising a carrier containing instructions for causing processing circuitry (such as the processing circuitry 12 of the first network node 10, 30 described earlier and/or the processing circuitry 22 of the second network node 20, 60 described earlier) to perform at least part of the method described herein. In some embodiments, the carrier can be any one of an electronic signal, an optical signal, an electromagnetic signal, an electrical signal, a radio signal, a microwave signal, or a computer-readable storage medium.

In some embodiments, the first network node functionality and/or the second network node functionality described herein can be performed by hardware. Thus, in some embodiments, any one or more of the first network node 10, 30 and the second network node 20, 60 described herein can be a hardware node. However, it will also be understood that optionally at least part or all of the first network node functionality and/or the second network node functionality described herein can be virtualized. For example, the functions performed by any one or more of the first network node 10, 30 and the second network node 20, 60 described herein can be implemented in software running on generic hardware that is configured to orchestrate the node functionality. Thus, in some embodiments, any one or more of the first network node 10, 30 and the second network node 20, 60 described herein can be a virtual node. In some embodiments, at least part or all of the first network node functionality and/or the second network node functionality described herein may be performed in a network enabled cloud. The first network node functionality and/or the second network node functionality described herein may all be at the same location or at least some of the node functionality may be distributed.

It will be understood that at least some or all of the method steps described herein can be automated in some embodiments. That is, in some embodiments, at least some or all of the method steps described herein can be performed automatically. The method described herein can be a computer-implemented method.

Thus, in the manner described herein, there is advantageously provided improved techniques for network node operation. In particular, by way of the technique described herein, it is possible for the first network node (e.g. the first SCP node 10 and/or the second NF node 30) to know if the first NF node supports a certain functionality. The first network node 10, 30 can thus adapt its behaviour depending on whether the first NF node 20 supports a certain functionality. In some cases, this may be crucial for some functionality to work and thus the network node operation is advantageously improved.

It should be noted that the above-mentioned embodiments illustrate rather than limit the idea, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method for operating a first network node (10, 30), wherein the method is performed by the first network node (10, 30), wherein the first network node (10, 30) is a first service communication proxy, SCP, node (10) that is configured to operate as an SCP between a first network function, NF, node (20) of a service consumer and a second NF node (30) of a service producer in the network, the method comprising:
acquiring (102, 700, 702, 704, 800, 802) information indicative of a functionality supported by the first NF node (20) in response to receiving a first request (604, 616, 800) transmitted towards the second NF node (30) via the first SCP node (10), wherein the first request (604, 616, 800) is for the second NF node (30) to provide a first service (40) requested by the first NF node (20); and
operating (104, 708, 804) based on the functionality supported by the first NF node (20).

2. A method as claimed in claim 1, wherein:
the information is acquired from a network repository function, NRF, node (60).

3. A method as claimed in claim 2, wherein:
the first request (604, 616) received at the first network node (10, 30) comprises one or more identifiers that allow the first NF node (20) to be identified; and
acquiring (102, 700, 702, 704) the information from the NRF node (60) comprises:
acquiring the information from the NRF node (60) using the one or more identifiers.

4. A method as claimed in claim 2 or 3, wherein:
acquiring (102, 700, 702, 704) the information from the NRF node (60) comprises:
acquiring the information from a profile of the first NF node (20) stored at the NRF node (60).

5. A method as claimed in any of claims 2 to 4, wherein:
acquiring (102, 700, 702, 704) the information from the NRF node (60) comprises:
initiating (702) transmission of a second request (702) for the information towards the NRF node (60).

6. A method as claimed in any of the preceding claims, wherein:
the information is acquired from the first NF node (20).

7. A first network node (10, 30) comprising:
processing circuitry (12) configured to operate in accordance with any of claims 1 to 6.

8. A method for providing information to a first network node (10, 30), wherein the method is performed by a second network node (20, 60), wherein the second network node (20, 60) is a network repository function, NRF, node (60) or a first network function, NF, node (20) of a service consumer, wherein the first network node (10, 30) is a first service communication proxy, SCP, node (10) configured to operate as an SCP between the first NF node (20) and a second NF node (30) of a service producer in the network, the method comprising:
providing (202, 704, 800) the first network node (10, 30) with access to information indicative of a functionality supported by the first NF node (20) to allow the first network node (10, 30) to acquire the information in response to receiving a first request (604, 616, 800) transmitted towards the second NF node (30) via the first SCP node (10) and operate based on the functionality supported by the first NF node (20), wherein the first request (604, 616, 800) is for the second NF node (30) to provide a first service (40) requested by the first NF node (20).

9. A method as claimed in claim 8, wherein:
the NRF node (60) provides the first network node (10, 30) with access to the information by:
providing (704) the first network node (10, 30) with access to a profile of the first NF node (20) stored at the NRF node (60), wherein the profile comprises the information.

10. A method as claimed in claim 8 or 9, wherein:
the NRF node (60) provides the first network node (10, 30) with access to the information in response to receiving a second request (702) for the information.

11. A method as claimed in any of claims 8 to 10, wherein:
the NRF node (60) provides the first network node (10, 30) with access to the information by:
initiating (704) transmission of the information towards the first network node (10, 30).

12. A method as claimed in any of claims 8 to 11, wherein:
the method performed by first NF node (20) comprises:
initiating transmission of a first request (604, 616, 800) towards the second NF node (30) via the first SCP node (10), wherein the first request (604, 616, 800) is for the second NF node (30) to provide a first service (40) requested by the first NF node (20).

13. A second network node (20, 60) comprising:
processing circuitry (22) configured to operate in accordance with any of claims 8 to 12.

14. A method performed by a system, the method comprising:
the method as claimed in any of claims 1 to 6; and
the method as claimed in any of claims 8 to 12.

15. A system comprising:
at least one first SCP node (10) as claimed in claim 7; and
at least one first NF node (20) as claimed in claim 13 and/or at least one NRF node (60) as claimed in claim 13.

## Patentansprüche

1. Verfahren zum Betreiben eines ersten Netzknotens (10, 30), wobei das Verfahren durch den ersten Netzknoten (10, 30) durchgeführt wird, wobei der erste Netzknoten (10, 30) ein erster Dienstkommunikationsproxy-Knoten, SCP-Knoten, (10) ist, der konfiguriert ist, um als ein SCP zwischen einem ersten Netzfunktions-Knoten, NF-Knoten, (20) eines Dienstkonsumenten und einem zweiten NF-Knoten (30) eines Dienstproduzenten in dem Netz betrieben zu werden, das Verfahren umfassend:
Erfassen (102, 700, 702, 704, 800, 802) von Informationen, die eine Funktionalität angeben, die durch den ersten NF-Knoten (20) unterstützt wird, als Reaktion auf ein Empfangen einer ersten Anforderung (604, 616, 800), die über den ersten SCP-Knoten (10) zu dem zweiten NF-Knoten hin (30) übertragen wird, wobei die erste Anforderung (604, 616, 800) an den zweiten NF-Knoten (30) gerichtet ist, um einen ersten Dienst (40) bereitzustellen, der durch den ersten NF-Knoten (20) angefordert wird; und
Betreiben (104, 708, 804) basierend auf der Funktionalität, die durch den ersten NF-Knoten (20) unterstützt wird.

2. Verfahren nach Anspruch 1, wobei:
die Informationen von einem Netz-Repository-Funktions-Knoten, NRF-Knoten, (60) erfasst werden.

3. Verfahren nach Anspruch 2, wobei:
die erste Anforderung (604, 616), die an dem ersten Netzknoten (10, 30) empfangen wird, eine oder mehrere Identifizierer umfasst, die dem ersten NF-Knoten (20) ermöglichen, identifiziert zu werden; und
das Erfassen (102, 700, 702, 704) der Informationen von dem NRF-Knoten (60) umfasst:
Erfassen der Informationen von dem NRF-Knoten (60) unter Verwendung der einen oder der mehreren Identifizierer.

4. Verfahren nach Anspruch 2 oder 3, wobei:
das Erfassen (102, 700, 702, 704) der Informationen von dem NRF-Knoten (60) umfasst:
Erfassen der Informationen aus einem Profil des ersten NF-Knotens (20), das in dem NRF-Knoten (60) gespeichert ist.

5. Verfahren nach einem der Ansprüche 2 oder 4, wobei:
das Erfassen (102, 700, 702, 704) der Informationen vom NRF-Knoten (60) umfasst:
Einleiten (702) einer Übertragung einer zweiten Anforderung (702) der Informationen zu dem NRF-Knoten (60) hin.

6. Verfahren nach einem der vorstehenden Ansprüche, wobei:
die Informationen von dem ersten NF-Knoten (20) erfasst werden.

7. Erster Netzknoten (10, 30), umfassend:
eine Verarbeitungsschaltlogik (12), die konfiguriert ist, um nach einem der Ansprüche 1 bis 6 betrieben zu werden.

8. Verfahren zum Bereitstellen von Informationen an einen ersten Netzknoten (10, 30), wobei das Verfahren durch einen zweiten Netzknoten (20, 60) durchgeführt wird, wobei der zweite Netzknoten (20, 60) ein Netz-Repository-Funktions-Knoten, NRF-Knoten, (60) oder ein erster Netzfunktions-Knoten, NF-Knoten, (20) eines Dienstkonsumenten ist, wobei der erste Netzknoten (10, 30) ein erster Dienstkommunikations-Proxy-Knoten, SCP-Knoten, (10) ist, der konfiguriert ist, um als ein SCP zwischen dem ersten NF-Knoten (20) und einem zweiten NF-Knoten (30) eines Dienstproduzenten in dem Netz betrieben zu werden, das Verfahren umfassend:
Bereitstellen (202, 704, 800) des ersten Netzknotens (10, 30) mit Zugriff auf Informationen, die eine Funktionalität anzeigen, die durch den ersten NF-Knoten (20) unterstützt wird, um es dem ersten Netzknoten (10, 30) zu ermöglichen, um die Informationen als Reaktion auf das Empfangen einer ersten Anforderung (604, 616, 800) zu erfassen, die über den ersten SCP-Knoten (10) zu dem zweiten NF-Knoten (30) hin übertragen wird, und basierend auf der Funktionalität betrieben zu werden, die durch den ersten NF-Knoten (20) unterstützt wird, wobei die erste Anforderung (604, 616, 800) an den zweiten NF-Knoten (30) gerichtet ist, um einen ersten Dienst (40) bereitzustellen, der durch den ersten NF-Knoten (20) angefordert wird.

9. Verfahren nach Anspruch 8, wobei:
der NRF-Knoten (60) dem ersten Netzknoten (10, 30) Zugriff auf die Informationen bereitstellt durch:
Bereitstellen (704) dem ersten Netzknoten (10, 30) des Zugriffs auf ein Profil des ersten NF-Knotens (20), das in dem NRF-Knoten (60) gespeichert ist, wobei das Profil die Informationen umfasst.

10. Verfahren nach Anspruch 8 oder 9, wobei:
der NRF-Knoten (60) dem ersten Netzknoten (10, 30) Zugriff auf die Informationen als Reaktion auf das Empfangen einer zweiten Anforderung (702) der Informationen.

11. Verfahren nach Anspruch 8 oder 10, wobei:
der NRF-Knoten (60) dem ersten Netzknoten (10, 30) Zugriff auf die Informationen bereitstellt durch:
Einleiten (704) der Übertragung der Informationen zu dem ersten Netzknoten (10, 30) hin.

12. Verfahren nach Anspruch 8 oder 11, wobei:
das Verfahren, das durch den ersten NF-Knoten (20) durchgeführt wird, umfasst:
Einleiten der Übertragung einer ersten Anforderung (604, 616, 800) über den ersten SCP-Knoten (10) zu dem zweiten NF-Knoten (30) hin, wobei die erste Anforderung (604, 616, 800) an den zweiten NF-Knoten (30) gerichtet ist, um einen ersten Dienst (40) bereitzustellen, der durch den ersten NF-Knoten (20) angefordert wird.

13. Zweiter Netzknoten (20, 60), umfassend:
die Verarbeitungsschaltlogik (22), die konfiguriert ist, um nach einem der Ansprüche 8 bis 12 betrieben zu werden.

14. Verfahren, das durch ein System durchgeführt wird, das Verfahren umfassend:
das Verfahren nach einem der Ansprüche 1 bis 6; und
das Verfahren nach einem der Ansprüche 8 bis 12.

15. System, umfassend:
mindestens einen SCP-Knoten (10) nach Anspruch 7; und
mindestens einen ersten NF-Knoten (20) nach Anspruch 13 und/oder mindestens einen NRF-Knoten (60) nach Anspruch 13.

## Revendications

1. Procédé de fonctionnement d'un premier noeud de réseau (10, 30), dans lequel le procédé est réalisé par le premier noeud de réseau (10, 30), dans lequel le premier noeud de réseau (10, 30) est un premier noeud de mandataire de communication de service, SCP, (10) qui est configuré pour fonctionner en tant que SCP entre un premier noeud de fonction de réseau, NF, (20) d'un consommateur de service et un second noeud NF (30) d'un producteur de service dans le réseau, le procédé comprenant :
l'acquisition (102, 700, 702, 704, 800, 802) d'informations indiquant une fonctionnalité prise en charge par le premier noeud NF (20) en réponse à la réception d'une première demande (604, 616, 800) transmise vers le second noeud NF (30) par l'intermédiaire du premier noeud SCP (10), dans lequel la première demande (604, 616, 800) est destinée au second noeud NF (30) pour fournir un premier service (40) demandé par le premier noeud NF (20) ; et
le fonctionnement (104, 708, 804) sur la base de la fonctionnalité prise en charge par le premier noeud NF (20).

2. Procédé selon la revendication 1, dans lequel :
les informations sont acquises auprès d'un noeud de fonction de référentiel réseau, NRF, (60).

3. Procédé selon la revendication 2, dans lequel :
la première demande (604, 616) reçue au niveau du premier noeud de réseau (10, 30) comprend un ou plusieurs identifiants permettant d'identifier le premier noeud NF (20) ; et
l'acquisition (102, 700, 702, 704) des informations auprès du noeud NRF (60) comprend :
l'acquisition des informations auprès du noeud NRF (60) à l'aide du ou des identifiants.

4. Procédé selon la revendication 2 ou 3, dans lequel :
l'acquisition (102, 700, 702, 704) des informations auprès du noeud NRF (60) comprend :
l'acquisition des informations auprès d'un profil du premier noeud NF (20) stocké au niveau du noeud NRF (60).

5. Procédé selon l'une quelconque des revendications 2 à 4, dans lequel :
l'acquisition (102, 700, 702, 704) des informations auprès du noeud NRF (60) comprend :
le lancement (702) d'une transmission d'une seconde demande (702) d'informations vers le noeud NRF (60).

6. Procédé selon l'une quelconque des revendications précédentes, dans lequel :
les information sont acquises auprès du premier noeud NF (20).

7. Premier noeud de réseau (10, 30) comprenant :
une circuiterie de traitement (12) configurée pour fonctionner conformément à l'une quelconque des revendications 1 à 6.

8. Procédé de fourniture d'informations à un premier noeud de réseau (10, 30), dans lequel le procédé est réalisé par un second noeud de réseau (20, 60), dans lequel le second noeud de réseau (20, 60) est un noeud de fonction de référentiel réseau, NRF, (60) ou un premier noeud de fonction de réseau, NF, (20) d'un consommateur de service, dans lequel le premier noeud de réseau (10, 30) est un premier noeud de mandataire de communication de service, SCP, (10) configuré pour fonctionner en tant que SCP entre le premier noeud NF (20) et un second noeud NF (30) d'un producteur de service dans le réseau, le procédé comprenant :
la fourniture (202, 704, 800), au premier noeud de réseau (10, 30), d'un accès à des informations indiquant une fonctionnalité prise en charge par le premier noeud NF (20) pour permettre au premier noeud de réseau (10, 30) d'acquérir les informations en réponse à la réception d'une première demande (604, 616, 800) transmise vers le second noeud NF (30) par l'intermédiaire du premier noeud SCP (10) et de fonctionner sur la base de la fonctionnalité prise en charge par le premier noeud NF (20), dans lequel la première demande (604, 616, 800) est destinée au second noeud NF (30) pour fournir un premier service (40) demandé par le premier noeud NF (20).

9. Procédé selon la revendication 8, dans lequel :
le noeud NRF (60) fournit, au premier noeud de réseau (10, 30), l'accès aux informations par :
fourniture (704), au premier noeud de réseau (10, 30), de l'accès à un profil du premier noeud NF (20) stocké au niveau du noeud NRF (60), dans lequel le profil comprend les informations.

10. Procédé selon la revendication 8 ou 9, dans lequel :
le noeud NRF (60) fournit, au premier noeud de réseau (10, 30), l'accès aux informations en réponse à la réception d'une seconde demande (702) d'informations.

11. Procédé selon l'une quelconque des revendications 8 à 10, dans lequel :
le noeud NRF (60) fournit, au premier noeud de réseau (10, 30), l'accès aux informations par :
lancement (704) d'une transmission des informations vers le premier noeud de réseau (10, 30).

12. Procédé selon l'une quelconque des revendications 8 à 11, dans lequel :
le procédé réalisé par le premier noeud NF (20) comprend :
le lancement d'une transmission d'une première demande (604, 616, 800) vers le second noeud NF (30) par l'intermédiaire du premier noeud SCP (10), dans lequel la première demande (604, 616, 800) est destinée au second noeud NF (30) pour fournir un premier service (40) demandé par le premier noeud NF (20).

13. Second noeud de réseau (20, 60) comprenant :
une circuiterie de traitement (22) configurée pour fonctionner conformément à l'une quelconque des revendications 8 à 12.

14. Procédé réalisé par un système, le procédé comprenant :
le procédé selon l'une quelconque des revendications 1 à 6 ; et
le procédé selon l'une quelconque des revendications 8 à 12.

15. Système comprenant :
au moins un premier noeud SCP (10) selon la revendication 7 ; et
au moins un premier noeud NF (20) selon la revendication 13 et/ou au moins un noeud NRF (60) selon la revendication 13.
